# EUROPEAN PATENT SPECIFICATION

(11) **EP 4 262 393 B1**
(45) Date of publication and mention of the grant of the patent: **02.12.2026**
(21) Application number: 21839206.6
(22) Date of filing: 17.12.2021
(51) Int. Cl.: A01N 43/40, A01N 25/00, A01N 25/04, A01P 3/00

(54) **METHODS FOR CONTROLLING OR PREVENTING INFESTATION OF PLANTS BY A PHYTOPATHOGENIC MICROORGANISM OF THE GENUS ASPERGILLUS**
VERFAHREN ZUR BEKÄMPFUNG ODER VERHINDERUNG DES BEFALLS VON PFLANZEN DURCH EINEN PHYTOPATHOGENEN MIKROORGANISMUS DER GATTUNG ASPERGILLUS
PROCÉDÉS DE LUTTE OU DE PRÉVENTION D'INFESTATION DE PLANTES PAR UN MICRO-ORGANISME PHYTOPATHOGÈNE DU GENRE ASPERGILLUS

(30) Priority: 17.12.2020 EP 20214958
(43) Date of publication of application: 25.10.2023
(73) Proprietor: Syngenta Crop Protection AG, 4058 Basel (CH)
(72) Inventor: OLAYA HUERTAS, Gilberto, Vero Beach, Florida 32967 (US)
(74) Representative: SYNGENTA IP
(86) International application number: PCT/EP2021/086542
(87) International publication number: WO 2022/129552

(56) References cited:
- WO-A1-2006/122952
- WO-A1-2016/066644
- WO-A1-2019/158476
- WO-A2-2009/068213
- WO-A2-2012/013590
- CN-A- 111 990 405
- ALI MD EMRAN ET AL: "Sensitivity of Aspergillus flavus Isolates from Peanut Seeds in Georgia to Azoxystrobin, a Quinone outside Inhibitor (QoI) Fungicide", JOURNAL OF FUNGI, vol. 7, no. 4, 9 April 2021 (2021-04-09), pages 284, XP055897992, DOI: 10.3390/jof7040284

## Description

### Technical Field

The present invention relates to methods for controlling or preventing infestation of plants by the phytopathogenic microorganism of the genus *Aspergillus.*

### Background

*Aspergillus* is a genus consisting of a few hundred mould species found in various climates worldwide and belong to the group of Ascomycota. *Aspergillus* are for example fungal pathogens on certain fruits and vegetables such as grapes, apricots, onions and peanuts. The family of *Aspergillus* grow as moulds on the surface of substrates. The peanut plant is mostly infected on the roots and on the stem. Hot and dry weather increases the risk for a plant to get infected because the hot soil scalds the tender peanut shoot and makes it vunerable to infection by the fungal pathogen *Aspergillus.* Symptoms include the rapid death of young plants in the field and the presence profuse, black, sooty fungal sporulation on the infected tissue. Crown rot may result in stand losses in the field as high as 50%. Hence, *Aspergillus sp.* is a commercially very serious phytopathogen in peanut plants. Furthermore, the currently used commercial standards for treating *Aspergillus* infected peanut plants do not show satisfactory control. Thus, there is a need to provide farmers with further methods for controlling this serious phytopathogen.

The current invention provides improved methods for controlling or preventing infestation of plants by the phytopathogenic microorganism *Aspergillus sp.,* in particular *Aspergillus niger.*

### Description of the embodiments

Cyclobutylcarboxamide compounds and processes for their preparation have been disclosed in WO2013/143811 and WO2015/003951. One cyclobutylcarboxamide, cyclobutrifluram (ISO name, CAS RN [1460292-16-3]), has been recently published as being under development as a nematicide (http://pmonline.azurewebsites.net/_Main/Pesticide.aspx). The chemical structure of cyclobutrifluram is the compound of formula (I)

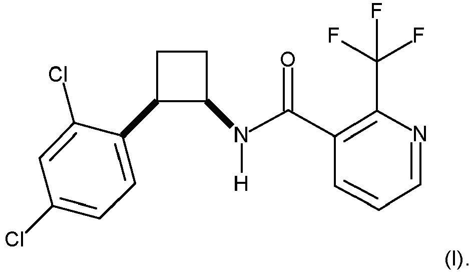

It was known that cyclobutrifluram has activity against root-knot nematodes such as *Meloidogyne* genus and cyst-forming nematodes such as *Heterodera* genus. These nematode species are soil based and attack the root system of many plants. Compounds with the same mechanism of action, i.e. SDHI, complex II, are known to have fungicidal activity. WO2009/068213 A2 and WO2012/013590 teach that SDHI fungicides, in particular, boscalid and fluopyram, are active against fungi from the genus *Aspergillus.* However, no data has been reported that cyclobutrifluram has any fungicial activity against a fungi from the genus *Aspergillus,* or on peanut plants, and in particular no data has been reported that cyclobutrifluram has any activity against *Aspergillus niger.*

It has now been surprisingly found that cyclobutrifluram is highly effective at controlling or preventing the infestation of plants by a phytopathogenic microorganism of the genus *Aspergillus.* This highly effective compound thus represents an important new solution for farmers to control or prevent infestation of plants by a phytopathogenic microorganism of the genus *Aspergillus.* It has been found that cyclobutrifluram is highly effective when used as a seed treatment on peanuts against the infestation by a phytopathogenic microorganism of the genus *Aspergillus. Aspergillus* for example infects roots and stems of peanut plants which means that cyclobutrifluram is capable to not only protect the seed on which it is applied but also the plant growing from that treated seed. Testing has shown cyclobutrifluram protects the plants growing from a treated seed far more effectively than any currently used commercial standards. Thus, cyclobutrifluram presents an excellent tool for farmers for controlling or preventing infestation of plants by a phytopathogenic microorganism of the genus *Aspergillus.*

Hence, as embodiment 1, there is provided a method for controlling or preventing infestation of plants by a phytopathogenic microorganism of the genus *Aspergillus,* comprising applying to a crop of plants, the locus thereof, or propagation material thereof, the compound cyclobutrifluram. Cyclobutrifluram as disclosed above represents the *cis* racemate: the phenyl ring on the left hand side and the pyridyl-C(=O)-NH group on the right hand side are *cis* to each other on the cyclobutyl ring as illustrated for compound of formula (Ia) and (Ib):

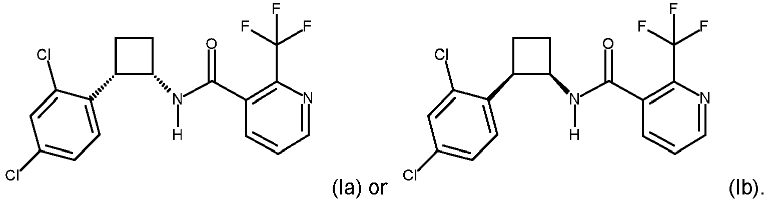

Thus, the racemic compound of cyclobutrifluram is a 1:1 mixture of the compounds of formula (la) and (Ib). The wedged bonds shown in the compounds of formula (la) and (Ib) represent absolute stereochemistry, whereas the thick straight bonds such as those shown for compound of formula (I) represent relative stereochemistry in racemic compounds.

It has also surprisingly been found that one enantiomer of cyclobutrifluram is particularly useful in a method for controlling or preventing infestation of plants by a phytopathogenic microorganism of the genus *Aspergillus.*

Thus, as embodiment 2, there is provided the method according to embodiment 1 wherein cyclobutrifluram is in the form of the (1S, 2S) stereoisomer

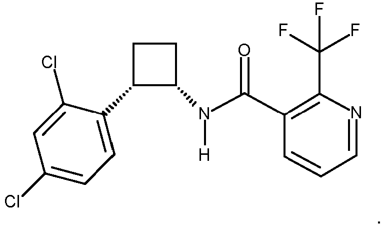

A skilled person is aware that according to the method of embodiment 1 or 2, cyclobutrifluram is generally applied as part of a pesticidal composition. Hence, as embodiment 3, there is provided a method for controlling or preventing infestation of plants by a phytopathogenic microorganism of the genus *Aspergillus* comprising applying to a crop of plants, the locus thereof, or propagation material thereof a pesticidal composition comprising cyclobutrifluram and one or more formulation adjuvants. As embodiment 4, there is provided a method for controlling or preventing infestation of plants by a phytopathogenic microorganism of the genus *Aspergillus* comprising applying to a crop of plants, the locus thereof, or propagation material thereof a pesticidal composition comprising a compound of formula (Ia) and one or more formulation adjuvants. In a method according to embodiment 5, for pesticidal compositions comprising both the (1S,2S) and (1R,2R) stereoisomers of cyclobutrifluram, the ratio of the (1S,2S) stereoisomer to its enantiomer (1R,2R) is greater than 1:1. Preferably, the ratio of the (1S,2S) to (1S,2S) is greater than 1.5:1, more preferably greater than 2.5:1, especially greater than 4:1, advantageously greater than 9:1, desirably greater than 20:1, in particular greater than 35:1.

Mixtures containing up to 50%, preferably up to 40%, more preferably up to 30%, especially up to 20%, advantageously up to 10%, desirably up to 5%, in particular up to 3 %, of the *trans* stereoisomers of the compounds of formula (I) (i.e. wherein the phenyl and the pyridyl-C(=O)-NH groups are *trans* to each other) are also understood to be part of this invention. Preferably, the ratio of the *cis* isomer to its *trans* isomer is greater than 1.5:1, more preferably greater than 2.5:1, especially greater than 4:1, advantageously greater than 9:1, desirably greater than 20:1, in particular greater than 35:1.

As embodiment 6, there is provided the method according to any one of embodiments 1 to 5, wherein the pesticidal composition is a suspension concentrate composition.

As embodiment 7, there is provided the method according to any one of embodiments 1 to 6 comprising the steps
providing cyclobutrifluram or a pesticidal composition comprising cyclobutrifluram as defined in any one of embodiments 1 to 6;
applying the composition to a propagation material;
planting the propagation material.

As embodiment 8, there is provided the method according to any one of embodiments 1 to 6 comprising the steps
providing cyclobutrifluram or a pesticidal composition comprising cyclobutrifluram as defined in any one of embodiments 1 to 6;
applying the composition to a crop of plants or the locus thereof.

As embodiment 9, there is provided the use of cyclobutrifluram or a pesticidal composition comprising cyclobutrifluram as defined in any one of embodiments 1 to 6 for controlling or preventing infestation of plants by a phytopathogenic microorganism of the genus *Aspergillus.*

As embodiment 10, there is provided a method for growing a plant comprising applying or treating a propagation material thereof with cyclobutrifluram or a pesticidal composition comprising cyclobutrifluram as defined in any one of claims 1 to 6.

As embodiment 11, there is provided a method or use according to any one of claims 1 to 10 wherein the propagation material is a seed.

As embodiment 12, there is provided a method or use according to any one of claims 1 to 11, wherein the compound cyclobutrifluram is applied onto the seed in an amount of between 5 gram and 150 gram cyclobutrifluram per 100 kg seeds.

As embodiment 13, there is provided a method or use according to any one of claims 1 to 11, wherein the compound cyclobutrifluram is applied onto the seed in an amount of between 20 gram and 120 gram cyclobutrifluram per 100 kg seeds.

As embodiment 14, there is provided a method or use according to any one of claims 1 to 21, wherein the compound cyclobutrifluram is applied onto the seed in an amount of between 40 gram and 90 gram cyclobutrifluram per 100 kg seeds.

As embodiment 15, there is provided a method or use according to any one of claims 1 to 14, wherein the phytopathogenic microorganism is *Aspergillus niger.*

As embodiment 16, there is provided a method or use according to any one of claims 1 to 14, wherein the plant is selected from peanuts, grapes, apricots and onions.

As embodiment 17, there is provided a method or use according to any one of claims 1 to 14, wherein the plant is peanuts.

The preparation of cyclobutrifluram has been disclosed in WO2013/143811 and WO2015/003951.

The term "seed" embraces seeds and plant propagules of all kinds including but not limited to true seeds, seed pieces, suckers, corns, bulbs, fruit, tubers, grains, rhizomes, cuttings, cut shoots and the like and means in a preferred embodiment true seeds.

Application according to the methods or uses according to any one of embodiments 1 to 17 is preferably to a crop of plants, the locus thereof or propagation material thereof. Preferably application is to a crop of plants or propagation material thereof, more preferably to propagation material. Application of cyclobutrifluram or a pesticidal composition comprising cyclobutrifluram can be performed according to any of the usual modes of application, e.g. foliar, drench, soil, in furrow etc. The methods as defined in any one of embodiments 1 to 17 are suitable for use on any plant, including those that have been genetically modified to be resistant to active ingredients such as herbicides, or to produce biologically active compounds that control infestation by plant pests. Generally, cyclobutrifluram is used in the form of a composition (e.g. formulation) containing a carrier. Cyclobutrifluram and compositions comprising cyclobutrifluram as defined in any one of embodiments 1 to 5 can be used in various forms such as aerosol dispenser, capsule suspension, cold fogging concentrate, dustable powder, emulsifiable concentrate, emulsion oil in water, emulsion water in oil, encapsulated granule, fine granule, flowable concentrate for seed treatment, gas (under pressure), gas generating product, granule, hot fogging concentrate, macrogranule, microgranule, oil dispersible powder, oil miscible flowable concentrate, oil miscible liquid, paste, plant rodlet, powder for dry seed treatment, seed coated with a pesticide, soluble concentrate, soluble powder, solution for seed treatment, suspension concentrate (flowable concentrate), ultra low volume (ulv) liquid, ultra low volume (ulv) suspension, water dispersible granules or tablets, water dispersible powder for slurry treatment, water soluble granules or tablets, water soluble powder for seed treatment and wettable powder.

A formulation typically comprises a liquid or solid carrier and optionally one or more customary formulation auxiliaries, which may be solid or liquid auxiliaries, for example unepoxidized or epoxidized vegetable oils (for example epoxidized coconut oil, rapeseed oil or soya oil), antifoams, for example silicone oil, preservatives, clays, inorganic compounds, viscosity regulators, surfactant, binders and/or tackifiers. The composition may also further comprise a fertilizer, a micronutrient donor or other preparations which influence the growth of plants as well as comprising a combination containing the compound of the invention with one or more other biologically active agents, such as bactericides, fungicides, nematicides, plant activators, acaricides, and insecticides.

The compositions are prepared in a manner known per se, in the absence of auxiliaries for example by grinding, screening and/or compressing a solid compound of the present invention and in the presence of at least one auxiliary for example by intimately mixing and/or grinding the compound of the present invention with the auxiliary (auxiliaries). In the case of solid compounds of the invention, the grinding/milling of the compounds is to ensure specific particle size.

Examples of compositions for use in agriculture are emulsifiable concentrates, suspension concentrates, microemulsions, oil dispersibles, directly sprayable or dilutable solutions, spreadable pastes, dilute emulsions, soluble powders, dispersible powders, wettable powders, dusts, granules or encapsulations in polymeric substances, which comprise - at least - cyclobutrifluram and the type of composition is to be selected to suit the intended aims and the prevailing circumstances.

As a rule, the compositions comprise 0.1 to 99%, especially 0.1 to 95%, of cyclobutrifluram and 1 to 99.9%, especially 5 to 99.9%, of at least one solid or liquid carrier, it being possible as a rule for 0 to 25%, especially 0.1 to 20%, of the composition to be surfactants (% in each case meaning percent by weight). Whereas concentrated compositions tend to be preferred for commercial goods, the end consumer as a rule uses dilute compositions which have substantially lower concentrations of active ingredient.

Examples of foliar formulation types for pre-mix compositions are:
GR: Granules
WP: wettable powders
WG: water dispersable granules (powders)
SG: water soluble granules
SL: soluble concentrates
EC: emulsifiable concentrate
EW: emulsions, oil in water
ME: micro-emulsion
SC: aqueous suspension concentrate
CS: aqueous capsule suspension
OD: oil-based suspension concentrate, and
SE: aqueous suspo-emulsion.

Whereas, examples of seed treatment formulation types for pre-mix compositions are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

As with the nature of the formulations, the methods of application, such as foliar, drench, spraying, atomizing, dusting, scattering, coating or pouring, are chosen in accordance with the intended objectives and the prevailing circumstances.

The tank-mix compositions are generally prepared by diluting with a solvent (for example, water) the one or more pre-mix compositions containing different pesticides, and optionally further auxiliaries.

Suitable carriers and adjuvants can be solid or liquid and are the substances ordinarily employed in formulation technology, e.g. natural or regenerated mineral substances, solvents, dispersants, wetting agents, tackifiers, thickeners, binders or fertilizers.

Generally, a tank-mix formulation for foliar or soil application comprises 0.1 to 20%, especially 0.1 to 15 %, of the desired ingredients, and 99.9 to 80 %, especially 99.9 to 85 %, of a solid or liquid auxiliaries (including, for example, a solvent such as water), where the auxiliaries can be a surfactant in an amount of 0 to 20 %, especially 0.1 to 15 %, based on the tank-mix formulation.

Typically, a pre-mix formulation for foliar application comprises 0.1 to 99.9 %, especially 1 to 95 %, of the desired ingredients, and 99.9 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Normally, a tank-mix formulation for seed treatment application comprises 0.25 to 80 %, especially 1 to 75 %, of the desired ingredients, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, of the desired ingredients, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation.

Whereas commercial products will preferably be formulated as concentrates (e.g., pre-mix composition (formulation)), the end user will normally employ dilute formulations (e.g., tank mix composition).

Preferred seed treatment pre-mix formulations are aqueous suspension concentrates. The formulation can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art. Cyclobutrifluram is particularly suited for use in soil and seed treatment applications.

The invention will now be illustrated by the following non-limiting Examples.

### Biological examples

### (I) Effect of different fungicide treatments against Aspergillus niger

A peanut field trial was carried out on May 11, 2020 in Malpur, Gujarat, India, to evaluate the efficacy of different compounds against Aspergillus sp. fungi. The disease symptoms started to occur 4 weeks after planting and an assessment on disease incidence (% infected plants) was done 42 days after planting.

### Trial location:

| Trial | Planting Date | Variety |
|---|---|---|
| Location | | |
| Malpur, Gujarat, India | 11-Jun-2020 | Peanut, GG 20 |

### Treatment list - field trials:

| Treatment | | Al Rate (g Al/ha) | Application method |
|---|---|---|---|
| 1 | Untreated | --- | --- |
| 2 | VITAVAX^{®} POWER 75 WS, Carboxin 37.5, Thiram 37.5 (g/100g) | 225 g Al/100 kg | Seed treatment |
| 3 | Cyclobutrifluram, 200FS | 60 g Al/100 kg | Seed treatment |
| 4 | VIBRANCE^{®} MAXX Sedaxane Fludioxonil/Thiamethoxam | 150 g Al/100 kg; | Seed treatment |
| 5 | EVERGOL^{®} XTEND 308 FS; Penflufen/Trifloxystrobin | 30.8 g Al/100 kg; | Seed treatment |

### Crops and targets occurred in the field trials:

| | Latin name | Common name |
|---|---|---|
| Target | *Aspergillus niger* | |
| Crop | Arachis hypogaea | Peanut |

### Crop description:

| | |
|---|---|
| Test Crop | Peanut |
| Variety | GG 20 |
| Sowing or planting date | 11-Jun-2020 |

### Trial layout:

| | |
|---|---|
| Trial Environment (Test Method) | Field trial |
| Experimental Design | Randomized Complete Block |
| Plot size | 20.58 m² |
| # replications | 4 |

### Application details:

| | |
|---|---|
| Application Date | 11-Jun-2020 |
| Appl. Equipment Type | Seed Treatment Drum |
| Spray Volume | 8 ml/kg |
| Nozzle spacing and type | NA |
| Treatments applied | 1 |

### Assessments:

### Pest incidence, 42 days after planting

| Treatment | | | Pest incidence (LS Means), significantly different (Treatments with no letter in common are significantly different at the 5% probability level) | % efficacy based on disease incidence |
|---|---|---|---|---|
| 1 | Untreated | - | 14.12, A | 0.00 |
| 2 | VITAVAX^{®} POWER 75 WS, Carboxin 37.5, Thiram 37.5 (g/100g) | 225 g Al/100 kg | 7, B | 50.42 |
| 3 | Cyclobutrifluram, 200FS | 60 g Al/100 kg | 0.42, D | 97.03 |
| 4 | VIBRANCE^{®} MAXX Sedaxane | 150 g Al/100 kg; | 6.89, B | 51.20 |
| | Fludioxonil/Thiamethoxam Tebuconazole | 188 g Al/ha | | |
| 5 | EVERGOL^{®} XTEND 308 FS; | 30.8 g Al/100 kg; | 5, C | 64.59 |
| | Penflufen/Trifloxystrobin Tebuconazole | 188 g Al/ha | | |

### Conclusion:

Cyclobutrifluram (treatment 3) results in a significantly lower *Aspergillus niger* pest incidence compared to the untreated and standard treatments. Cyclobutrifluram (treatment 3) exhibits surprisingly excellent control of *Aspergillus niger* on this peanut trial in Gujarat/India over a duration of 42 days after application. This control is significantly better than the commercial standards VITAVAX^{®} POWER 75 WS, VIBRANCE^{®} MAXX and EVERGOL^{®} XTEND and hence provides an important tool for farmers to control *Aspergillus niger.*

### (II) Sensitivity to cyclobutrifluram and azoxystrobin of Aspergillus niger and Aspergillus flavus isolates

The sensitivity to cyclobutrifluram of 104 isolates of *Aspergillus niger* and 31 isolates of *Aspergillus flavus* was determined under in vitro lab conditions using a mycelial growth inhibition assay. Isolates of *Aspergillus niger* were retrieved from infected seeds or infected plants with clear symptoms of crown rot disease. Isolates of *Aspergillus flavus* were collected from infected seeds. The sensitivity to azoxystrobin of the isolates was determined under in vitro conditions using a conidial germination inhibition assay. Sensitivity tests were conducted in vitro using agar medium amended with cyclobutrifluram or azoxystrobin at the following concentrations: 0, 0.001, 0.01, 0.1, 1, and 10 mg a.i./L. The plates were incubated at room temperature (22 C). The mycelial growth of the colonies growing on plates amended or not with cyclobutrifluram was determined after 5 days of incubation. The conidial germination on agar plates amended or not with azoxystrobin was determined after 18 hours of incubation. A conidium was rated as germinated, if a normally developing germ tube had at least the length of a conidium.

The concentration that effectively inhibited the mycelial growth (cyclobutrifluram) or inhibited conidial germination (azoxystrobin) by 50% of the nontreated control (EC₅₀ values) was calculated for each isolate by regressing the radial growth values against the log 10 values of the fungicide concentrations. Effective dose values (EC₅₀) are expressed in mg of cyclobutrifluram or azoxystrobin active ingredient / L.

### Trial location:

| | |
|---|---|
| Trial location | Syngenta Vero Beach Reserach Center |
| | 7145 58th Avenue |
| | Vero Beach, Fllorida 32960, USA |

### Trial layout:

| | |
|---|---|
| Trial Environment (Test Method) | Laboratory study |
| Experimental Design | Fully randomized |
| Petri plates size | 60 mm diameter x 15 mm height |
| # replications | 2 |

### Results:

The distribution of sensitivities (EC₅₀ values) of *Aspergillus niger* isolates to cyclobutrifluram ranged from 0.009245 to 0.703309 mg a.i./L, with a geometric mean of 0.082012 mg a.i./L and a range of 76x. The azoxystrobin sensitivities (EC50 values) ranged from 0.000793 to more than 10 mg.ai/L (highest concentration used in the study), indicating that several isolates were resistant or tolerate the fungicide azoxystrobin (Table 1).

The distribution of sensitivities (EC₅₀ values) of *Aspergillus flavus* isolates to cyclobutrifluram ranged from 0.026207 to 0.700136 mg a.i./L, with a geometric mean of 0.107749 mg a.i./L and a range of 27x. The azoxystrobin sensitivities (EC50 values) ranged from 0.003457 to more than 10 mg.ai/L, demonstrating that several isolates were also resistant to the fungicide azoxystrobin (Table 2).

**Table 1. Sensitivity to cyclobutrifluram and azoxystrobin of Aspergillus niger isolates retrieved from infected peanut seeds or infected peanut plants.**

| | Azoxystrobin EC₅₀ values (mg.ai/L) | Cyclobutrifluram EC₅₀ values (mg.ai/L) |
|---|---|---|
| Mean | - | 0.082012 |
| Minimum | <0.001 | 0.009245 |
| Maximum | >10 | 0.703309 |
| Range | >1000x | 76x |
| Number of isolates | 104 | 104 |

**Table 2. Sensitivity to cyclobutrifluram and azoxystrobin of Aspergillus flavus isolates retrieved from infected peanuts seeds.**

| | Azoxystrobin EC₅₀ values (mg.ai/L) | Cyclobutrifluram EC₅₀ values (mg.ai/L) |
|---|---|---|
| Mean | - | 0.107749 |
| Minimum | 0.003457 | 0.026207 |
| Maximum | >10 | 0.700136 |
| Range | >1000x | 27x |
| Number of isolates | 31 | 31 |

### Conclusion:

The above results demonstrate that cyclobutrifluram exhibits surprisingly strong and consistent activity against both *Aspergillus niger* and *Aspergillus flavus.* Azoxystrobin has been the most common fungicide used to control peanut crown rot caused by *Aspergillus niger,* but resistant development to azoxystrobin has reduced its use in areas where resistant isolates are detected. Similarly, azoxystrobin has been the product of choice to clean peanut seeds infected by *Aspergillus flavus,* but resistance development has decreased this fungicide use application. Cyclobutrifluram exhibits surprisingly excellent control of *Aspergillus niger* and *Aspergillus flavus* isolates that are sensitive or resistant to azoxystrobin. Cyclobutrifluram can therefore be used to control *Aspergillus niger* and *Aspergillus flavus* that have developed resistance to the current commercial standard, azoxystrobin, and hence provides an important resistance management tool for farmers.

## Claims

1. A method for controlling or preventing infestation of plants by a phytopathogenic microorganism of the genus *Aspergillus,* comprising applying to a crop of plants, the locus thereof, or propagation material thereof, the compound cyclobutrifluram.

2. The method according to claim 1, wherein the compound cyclobutrifluram is applied as a pesticidal composition comprising cyclobutrifluram and one or more formulation adjuvants.

3. The method according to claim 1 or 2, wherein the pesticidal composition is a suspension composition.

4. The method according to any one of claims 1 to 3, wherein the compound cyclobutrifluram or a pesticidal composition comprising cyclobutrifluram is applied on a propagation material.

5. The method according to claim 4, wherein the propagation material is a seed.

6. The method according to claim 5 wherein the compound cyclobutrifluram is applied onto the seed in an amount of between 5 gram and 150 gram cyclobutrifluram per 100 kg seeds.

7. The method according to claim 6 wherein the compound cyclobutrifluram is applied onto the seed in an amount of between 20 gram and 120 gram cyclobutrifluram per 100 kg seeds.

8. The method according to claim 7 wherein the compound cyclobutrifluram is applied onto the seed in an amount of between 40 gram and 90 gram cyclobutrifluram per 100 kg seeds.

9. Use of cyclobutrifluram or a pesticidal composition comprising cyclobutrifluram for controlling or preventing infestation of plants by a phytopathogenic microorganism *Aspergillus.*

10. The method or use according to any one of claims 1 to 9, wherein the phytopathogenic microorganism is *Aspergillus niger.*

11. The method or use according to any one of claims 1 to 9, wherein the phytopathogenic microorganism is *Aspergillus flavus.*

12. The method or use according to any one of claims 1 to 11, wherein the phytopathogenic microorganism is resistant to azoxystrobin.

13. The method or use according to any one of claims 1 to 12, wherein the plant is selected from peanuts, grapes, apricots and onions.

14. The method or use according to any one of claims 1 to 12, wherein the plant is peanuts.

## Patentansprüche

1. Verfahren zum Eindämmen oder Verhindern des Befalls von Pflanzen durch einen phytopathogenen Mikroorganismus der Gattung Aspergillus, umfassend das Aufbringen der Verbindung Cyclobutrifluram auf eine Kultur von Pflanzen, den Standort davon, oder Fortpflanzungsmaterial davon.

2. Verfahren nach Anspruch 1, wobei die Verbindung Cyclobutrifluram als eine Cyclobutrifluram und einen oder mehrere Formulierungshilfsstoffe umfassende Pestizidzusammensetzung aufgebracht wird.

3. Verfahren nach Anspruch 1 oder 2, wobei die Pestizidzusammensetzung eine Suspensionszusammensetzung ist.

4. Verfahren nach einem der Ansprüche 1 bis 3, wobei die Verbindung Cyclobutrifluram oder eine Cyclobutrifluram umfassende Pestizidzusammensetzung auf ein Fortpflanzungsmaterial aufgebracht wird.

5. Verfahren nach Anspruch 4, wobei das Fortpflanzungsmaterial ein Samen ist.

6. Verfahren nach Anspruch 5, wobei die Verbindung Cyclobutrifluram auf den Samen in einer Menge von zwischen 5 Gramm und 150 Gramm Cyclobutrifluram pro 100 kg Samen aufgebracht wird.

7. Verfahren nach Anspruch 6, wobei die Verbindung Cyclobutrifluram auf den Samen in einer Menge von zwischen 20 Gramm und 120 Gramm Cyclobutrifluram pro 100 kg Samen aufgebracht wird.

8. Verfahren nach Anspruch 7, wobei die Verbindung Cyclobutrifluram auf den Samen in einer Menge von zwischen 40 Gramm und 90 Gramm Cyclobutrifluram pro 100 kg Samen aufgebracht wird.

9. Verwendung von Cyclobutrifluram oder einer Cyclobutrifluram umfassenden Pestizidzusammensetzung zum Eindämmen oder Verhindern des Befalls von Pflanzen durch einen phytopathogenen Aspergillus-Mikroorganismus.

10. Verfahren oder Verwendung nach einem der Ansprüche 1 bis 9, wobei es sich bei dem phytopathogenen Mikroorganismus um Aspergillus niger handelt.

11. Verfahren oder Verwendung nach einem der Ansprüche 1 bis 9, wobei es sich bei dem phytopathogenen Mikroorganismus um Aspergillus flavus handelt.

12. Verfahren oder Verwendung nach einem der Ansprüche 1 bis 11, wobei der phytopathogene Mikroorganismus gegen Azoxystrobin resistent ist.

13. Verfahren oder Verwendung nach einem der Ansprüche 1 bis 12, wobei die Pflanze aus Erdnüssen, Weintrauben, Aprikosen und Zwiebeln ausgewählt ist.

14. Verfahren oder Verwendung nach einem der Ansprüche 1 bis 12, wobei es sich bei der Pflanze um Erdnüsse handelt.

## Revendications

1. Méthode pour contrôler ou prévenir l'infestation de plantes par un microorganisme phytopathogène du genre *Aspergillus*, comprenant d'appliquer sur une culture de plantes, son emplacement ou son matériel de propagation, le composé cyclobutrifluram.

2. Méthode selon la revendication 1, dans laquelle le composé cyclobutrifluram est appliqué sous forme de composition pesticide contenant du cyclobutrifluram et au moins un adjuvant de formulation.

3. Méthode selon la revendication 1 ou 2, dans laquelle la composition pesticide est une suspension.

4. Méthode selon l'une quelconque des revendications 1 à 3, dans laquelle le composé cyclobutrifluram ou une composition pesticide contenant du cyclobutrifluram est appliquée sur un matériel de propagation.

5. Méthode selon la revendication 4, dans laquelle le matériel de propagation est une graine.

6. Méthode selon la revendication 5, dans laquelle le composé cyclobutrifluram est appliqué sur la graine à hauteur d'entre 5 g et 150 g de cyclobutrifluram pour 100 kg de graines.

7. Méthode selon la revendication 6, dans laquelle le composé cyclobutrifluram est appliqué sur la graine à hauteur d'entre 20 g et 120 g de cyclobutrifluram pour 100 kg de graines.

8. Méthode selon la revendication 7, dans laquelle le composé cyclobutrifluram est appliqué sur la graine à hauteur d'entre 40 g et 90 g de cyclobutrifluram pour 100 kg de graines.

9. Utilisation de cyclobutrifluram ou d'une composition pesticide contenant du cyclobutrifluram pour contrôler ou prévenir l'infestation de plantes par un microorganisme phytopathogène *Aspergillus*.

10. Méthode ou utilisation selon l'une quelconque des revendications 1 à 9, dans laquelle le microorganisme phytopathogène est *Aspergillus niger*.

11. Méthode ou utilisation selon l'une quelconque des revendications 1 à 9, dans laquelle le microorganisme phytopathogène est *Aspergillus flavus*.

12. Méthode ou utilisation selon l'une quelconque des revendications 1 à 11, dans laquelle le microorganisme phytopathogène est résistant à l'azoxystrobine.

13. Méthode ou utilisation selon l'une quelconque des revendications 1 à 12, dans laquelle la plante est choisie parmi l'arachide, le raisin, l'abricot et l'oignon.

14. Méthode ou utilisation selon l'une quelconque des revendications 1 à 12, dans laquelle la plante est l'arachide.
